# EUROPÄISCHE PATENTANMELDUNG

(11) **EP 1 741 682 A1**
(43) Veröffentlichungstag der Anmeldung: **10.01.2007**
(21) Anmeldenummer: 05014896.4
(22) Anmeldetag: 08.07.2005
(51) Int. Cl.: C04B 28/08, C04B 18/14, C04B 7/52

(54) **Zementklinker, Zement und Verfahren zur Herstellung von Zement**

(71) Anmelder: Kehrmann, Alexander, 46509 Xanten (DE)
(72) Erfinder: Kehrmann, Alexander, 46509 Xanten (DE)
(74) Vertreter: HOFFMANN EITLE

(57) **Zusammenfassung**

Ein Hauptbestandteil von Zement ist Zementklinker, der aus einem Rohstoffgemisch, welches Calciumoxid, Siliziumdioxid, Aluminiumoxid und Eisenoxid enthält, durch Mischen, Mahlen und Brennen hergestellt wird. Erfindungsgemäß wird dem Rohstoffgemisch Konverterschlacke in einem Anteil von bis zu 30 Gew.-% zugegeben. Hierdurch können sowohl natürliche Rohstoffressourcen geschont als auch der Kohlendioxidausstoß beim Brennen des Zementklinkers verringert werden.

## Beschreibung

Die Erfindung betrifft einen Zementklinker sowie einen Zement und ein Verfahren zur Herstellung von Zement.

Zement ist ein feingemahlenes hydraulisches Bindemittel, das bei Zugabe von Wasser erhärtet. Zement wird vor allem zur Herstellung von Betonmörtel, Betonsteinen oder Fertigteilen verwendet. Zement besteht im Wesentlichen aus Verbindungen von Calciumoxid mit Siliziumdioxid, Aluminiumoxid und Eisenoxid, die durch Sintern entstanden sind.

Hauptbestandteile des Zements sind Zementklinker und gegebenenfalls Hüttensand bzw. Trass. Nebenbestandteil ist unter anderem das in Form von Gipsstein oder Anhydrid zur Regelung des Erstarrens zugesetzte Calciumsulfat.

Zementklinker wird aus einem Rohstoffgemisch hergestellt, das hauptsächlich Calciumoxid CaO, Siliziumdioxid SiO₂, Aluminiumoxid Al₂O₃ und Eisenoxid Fe₂O₃ in bestimmten Anteilen enthält. Beim Erhitzen dieses Gemisches auf Temperaturen bis ca 1450 °C bilden sich durch Sinterung neue Verbindungen, die sogenannten Klinkerphasen.

Als Ausgangsmaterial zur Herstellung von Zementklinker wird neben Kalksteinmergel Kalkstein, Ton und Sand verwendet. Diese Ausgangsmaterialien werden in der Regel als natürliche Rohstoffe durch Abbau in Steinbrüchen gewonnen. Die Ausgangsmaterialien werden selten in der gewünschten Zusammensetzung in nur einem Rohstoff gefunden. Deshalb muss meistens ein Gemisch einer kalkreichen Komponente (Kalkkomponente) mit einer kalkärmeren, jedoch mehr Kieselsäure, Tonerde und Eisenoxid enthaltenden Komponente (Tonkomponente) hergestellt werden.

Bei der Herstellung von Zementklinker wird infolge der Umwandlung von Calciumcarbonat CaCO₃ in Calciumoxid CaO beim Brennvorgang Kohlendioxid CO₂ freigesetzt, das bekanntermaßen nachteilige Umwelteinflüsse mit sich bringt. Diese Emission ist aufgrund des Rohmaterials Kalkstein prozessbedingt unvermeidbar und erreicht ein Volumen von ca. 21 Millionen Tonnen pro Jahr allein in Deutschland.

Nachteilig an der Herstellung von Zement ist somit, dass in großen Mengen natürlich vorkommende Rohstoffe verbraucht werden und dass durch den Herstellungsprozess in erheblichem Umfang CO₂ freigesetzt wird.

Der Erfindung liegt ausgehend vom Stand der Technik die Aufgabe zugrunde, einen Zementklinker und einen Zement aufzuzeigen, welche unter Schonung natürlicher Rohstoffressourcen und unter Verringerung von Kohlendioxidemissionen hergestellt sind.

Die Lösung des den Zementklinker betreffenden Teils der Aufgabe besteht nach Patentanspruch 1 darin, dass dem Rohstoffgemisch, aus welchem der Zementklinker hergestellt wird, Konverterschlacke zugegeben ist.

Konverterschlacke, insbesondere LD-Konverterschlacke, fällt als Abfallstoff bei der Stahlerzeugung an. Konverterschlacke enthält alle für die Zementherstellung wichtigen Bestandteile, nämlich Calciumoxid CaO, Siliziumdioxid SiO₂, Aluminiumoxid Al₂O₃ und Eisenoxid Fe₂O₃.

Kernpunkt der Erfindung bildet nun die Maßnahme, einen Teil der natürlichen Rohstoffe durch Konverterschlacke zu ersetzen. Hierdurch werden die natürlichen Rohstoffvorkommen geschont. Vorteilhaft ist ferner, dass aufgrund der thermischen Prozesse im Konverter das im Kalkstein vorhandene Kohlendioxid bereits verbrannt ist, so dass in der Konverterschlacke der Calciumanteil als Calciumoxid vorliegt. Folglich wird der Kohlendioxidausstoß beim Brennen des Zementklinkers deutlich reduziert, da während des Brennprozesses erheblich weniger Calciumcarbonat CaCO₃ zu Calciumoxid CaO unter Freisetzung von CO₂ umgewandelt werden muss.

Vorteilhafterweise wird dem Rohstoffgemisch Konverterschlacke in einem Anteil bis zu 30 Gew.-% zugemischt (Anspruch 2). In der Praxis wird ein Anteil von Konverterschlacke im Rohstoffgemisch von 5 Gew.-% bis 10 Gew.-% als besonders vorteilhaft angesehen, wie dies Anspruch 3 vorsieht.

Anspruch 4 richtet sich auf einen Zement, hergestellt aus einem erfindungsgemäßen Zementklinker. Ein solcher Zement ist ökologisch sowie ökonomisch vorteilhaft.

Der verfahrensmäßige Teil der der Erfindung zugrunde liegenden Aufgabe wird durch ein Verfahren nach Anspruch 5 gelöst.

Danach wird ein Zement in bekannter Weise und mit bewährter Technologie hergestellt, wobei zunächst durch Mischen mehrerer Ausgangsstoffe ein Rohstoffgemisch hergestellt wird, welches zumindest eine Kalkkomponente und eine Tonkomponente enthält. Üblicherweise kommen als Hauptbestandteile des Rohstoffgemisches Calciumcarbonat in Form von Kalkstein, Siliziumdioxid in Form von Sand, Aluminiumoxid in Form von Tonerde oder Bauxit sowie Eisenoxide in Form von Eisenerzen zum Einsatz.

Erfindungsgemäß wird zur teilweisen Substitution eines oder mehrerer der Ausgangsstoffe Konverterschlacke in einem Anteil von bis zu 30 Gew.-% zugegeben. Die Konverterschlacke ersetzt folglich einen Teil der Ausgangsstoffe, so dass, wie bereits vorstehend erwähnt, natürliche Rohstoffressourcen geschont werden und der Kohlendioxidausstoß vermindert wird.

Zweckmäßigerweise wird gemäß Anspruch 6 Konverterschlacke in einem Anteil zwischen 5 Gew.-% bis 10 Gew.-% zugefügt.

Vorteilhafterweise ist die dem Zementklinker, dem Zement und bei dem Verfahren zur Herstellung von Zement als Ausgangsstoff des Rohstoffgemischs zuzusetzende Konverterschlacke auf eine Körnung kleiner als 15 mm gebrochen.

## Patentansprüche

1. Zementklinker hergestellt aus einem Rohstoffgemisch, das Calciumoxid CaO, Siliciumdioxid SiO₂, Aluminiumoxid Al₂O₃ und Eisenoxid Fe₂O₃ enthält, **dadurch gekennzeichnet, dass** dem Rohstoffgemisch Konverterschlacke zugegeben ist.

2. Zementklinker nach Anspruch 1, **dadurch gekennzeichnet, dass** das Rohstoffgemisch Konverterschlacke in einem Anteil bis zu 30 Gew.-% enthält.

3. Zementklinker nach Anspruch 1 oder 2, **dadurch gekennzeichnet, dass** das Rohstoffgemisch Konverterschlacke in einem Anteil von 5 Gew.-% bis 10 Gew.-% enthält.

4. Zement hergestellt aus einem Zementklinker gemäß einem der Ansprüche 1 bis 3.

5. Verfahren zur Herstellung von Zement, wobei durch Mischen mehrerer Ausgangsstoffe ein Rohstoffgemisch hergestellt wird, welches zumindest eine Kalkkomponente und eine Tonkomponente enthält, und aus dem Rohstoffgemisch durch Mahlen und Brennen ein Zementklinker hergestellt wird, welcher anschließend zu Zement weiterverarbeitet wird, **dadurch gekennzeichnet, dass** als ein Ausgangsstoff Konverterschlacke in einem Anteil von bis zu 30 Gew.-% zugegeben wird.

6. Verfahren nach Anspruch 5, **dadurch gekennzeichnet, dass** die Konverterschlacke in einem Anteil zwischen 5 Gew.-% bis 10 Gew.-% zugefügt wird.

## Geänderte Patentansprüche

### Geänderte Patentansprüche gemäss Regel 86(2) EPÜ.

**1.** Rohstoffgemisch zur Herstellung eines Zementklinkers, welches aus einer Kalkkomponente und Konverterschlacke besteht.

**2.** Rohstoffgemisch nach Anspruch 1, **dadurch gekennzeichnet, dass** Konverterschlacke in einem Anteil von bis zu 30 Gew.-% zugemischt ist.

**3.** Rohstoffgemisch nach Anspruch 1 oder 2, **dadurch gekennzeichnet, dass** Konverterschlacke in einem Anteil von 5 Gew.-% bis 10 Gew.-% zugemischt ist.

**4.** Zementklinker hergestellt aus einem Rohstoffgemisch gemäß einem der Ansprüche 1 bis 3.

**5.** Zement hergestellt aus einem Zementklinker gemäß Anspruch 4.
